# EUROPEAN PATENT SPECIFICATION

(11) **EP 2 594 764 B1**
(45) Date of publication and mention of the grant of the patent: **14.03.2018**
(21) Application number: 11189586.8
(22) Date of filing: 17.11.2011
(51) Int. Cl.: F02C 1/05, F01K 7/22, F01K 13/02, F03G 6/06, F22B 1/00

(54) **Steam turbine facility, and method for operating the same**
Dampfturbineneinrichtung und Verfahren zu deren Betrieb
Installation de turbine à vapeur et son procédé de fonctionnement

(43) Date of publication of application: 22.05.2013
(73) Proprietor: Siemens Aktiengesellschaft, 80333 München (DE)
(72) Inventor: Jöcker, Markus, 61243 Finspong (SE); Ortsaeter, Rickard, 60217 Norrköping (SE)

(56) References cited:
- WO-A2-2010/149614
- US-A- 4 387 574
- US-A- 5 806 317
- US-A1- 2011 127 773
- US-B1- 6 405 537

## Description

### Field of the Invention

The present invention relates to a steam turbine facility, comprising
- a main steam supply for supplying high pressure steam to a main supply pipe,
- a high pressure turbine drivable by steam fed from the main supply pipe to an inlet of the high pressure turbine,
- a low pressure turbine, rotationally coupled to the high pressure turbine, and drivable by low pressure steam extracted from an outlet of the high pressure turbine and fed via an intermediate pipe to an inlet of the low pressure turbine.

Further, the invention relates to a method for operating such steam turbine facility.

### Description of the Prior Art

Such facilities and operation methods are known from the prior art, e.g. as a means for converting thermal energy into electrical energy in a power plant.

In the operation of such known steam turbine facility, the high pressure turbine is driven by high pressure steam from the main steam supply and the low pressure turbine is driven by low pressure steam extracted from the outlet of the high pressure turbine.

In the context of the present application, the terms "high pressure" and "low pressure" shall describe a mutual relation of the corresponding pressure values. For example, when the steam turbine facility comprises a high pressure turbine stage, an intermediate pressure turbine stage and a low pressure turbine stage (as it is very common in the technical field of steam turbines), the intermediate pressure turbine stage may form the "low pressure turbine" in comparison with the high pressure turbine stage. However, it can also be regarded as the "high pressure turbine", namely if compared with the low pressure turbine stage.

In some applications, a continuous operation of the main steam supply is not safeguarded. An example is the case, in which the main steam supply is fed with a volatile energy source as solar energy. The generation of steam by means of solar energy depends on the actual solar radiation power received from the sun.

In the known steam turbine facilities, when the main steam supply is temporarily degraded, in principle, it would be possible to use the "lower quality (pressure) steam" generated in such phase for operating only the low pressure turbine, but not the high pressure turbine. In this way, a total shutdown and a disadvantageous cooling down of the turbine can be avoided.

In such situation, however, the high pressure turbine, which is rotationally coupled to the low pressure turbine, is operated "without steam". Operation time for a high pressure turbine without steam is usually limited (e.g. to about 1 or 2 hours), because a ventilation effect in the high pressure turbine (especially in the region of the exhaust blades) leads to a strong heating and thus a risk of overheating of the high pressure turbine after some time.

For some special operation situations, it would be desirable to maintain an operation with driving only the low pressure turbine (with a rotationally coupled high pressure turbine) for a longer time.

Steam turbine facilites with a main steam supply supplied with a volatile energy source (e.g. solar energy) are kwown from documents WO 2010/149614 A2 and US 2011/0127773 A1

### Summary of the Invention

It is an object of the present invention, to enable a maintenance of turbine operation in a steam turbine facility of the above described kind for a longer time, in a phase of degraded main steam supply.
According the present invention, the above object is solved by a steam turbine facility according to claim 1. The dependent claims are directed to advantageous embodiments of the invention.
The inventive steam turbine facility is characterised by auxiliary operation means for maintaining turbine operation in a phase of degraded main steam supply, wherein the auxiliary operation means are designed to branch off auxiliary steam from low pressure steam driving the low pressure turbine, and to inject the auxiliary steam at the inlet of the high pressure turbine.
Advantageously, the auxiliary steam that is branched off from the low pressure steam driving the low pressure turbine and injected into the main supply pipe provides a cooling effect for the high pressure turbine. In this way, such "auxiliary operation mode" can be provided for a longer time without resulting in a overheating of the high pressure turbine.
In an embodiment, the auxiliary operation means comprise a connection pipe connecting a branch of the intermediate pipe with a branch of the main supply pipe, and incorporating a controllable steam valve. The connection pipe can also incorporate a throat for pressure reduction.
The branch of the main supply pipe may be located at the most downstream section of the main supply pipe, e.g. directly before the inlet of the high pressure turbine.

The main supply pipe may further comprise a stop valve and a control valve for stopping and controlling, respectively, the steam supply via the main supply pipe. Preferably, these valves are arranged upstream of said branch for injecting the auxiliary steam into the main supply pipe. The control of auxiliary steam flow into the high pressure turbine may be controlled by means of said control valve in the connection pipe. The steam turbine facility further comprises a controllable high pressure bypass for controllable bypassing the high pressure turbine.
In the "auxiliary operation mode", in which the main steam supply is degraded, the low pressure turbine is driven by low pressure steam and the high pressure turbine is cooled by the auxiliary steam injected into the main supply pipe.
In this operation mode, one possibility for providing low pressure steam to the low pressure turbine is to activate the high pressure bypass for bypassing the high pressure turbine, so that degraded quality steam from the main steam supply flows over said bypass via a branch into the intermediate pipe and thus to the inlet of the low pressure turbine. Preferably, between the branch of the intermediate pipe and the inlet of the low pressure turbine, there is provided at least a control valve. The intermediate pipe may further comprise e.g. one or more stop valves, check valves etc. and/or a reheater for reheating the steam.
When the above mentioned connection pipe connecting a branch of the intermediate pipe with a branch of the main supply pipe is provided, the branch of the intermediate pipe is preferably arranged upstream of the (at least one) control valve in the intermediate pipe. In this way, it is possible to independently control two steam flows emerging from one and the same "degraded steam source", one steam flow flowing to the inlet of the low pressure turbine, and the other steam flow flowing via the connection pipe to the inlet of the high pressure turbine (for providing the desired cooling effect).

In an embodiment, the steam turbine facility further comprises an "alternative steam supply" for supplying low pressure steam to the intermediate pipe in the case of degraded main steam supply.

For example, if the main steam supply is provided by means of solar energy (or another volatile energy source), especially in a power plant for generating electrical energy by means of an electrical generator coupled to the steam turbine, in the "auxiliary operation mode", an alternative steam supply may be also used for providing the "degraded steam", with or without further contribution of the main steam supply to this degraded steam production.

In the case, in which the facility is provided with an alternative steam supply, an arrangement of steam valves is preferably designed to allow for a controlled merging degraded steam flows emerging on the one hand from the main steam supply and on the other hand from the alternative steam supply.

The alternative steam supply may be operated by electrical power or any other suitable energy source.

The merged steam flow in the intermediate pipe may then be distributed by means of one or more control valves for providing a controlled steam flow to the inlet of the low pressure turbine and another controlled steam flow of the branched off steam flowing via the connection pipe to the high pressure turbine.

The inventive steam turbine facility can be very advantageously used e.g. in a solar power plant, comprising the steam turbine facility, wherein the main steam supply is provided by means of solar energy.

According to the present invention, there is further provided a method for operating a steam turbine facility of the kind described above, wherein in a normal operation mode, the high pressure turbine is driven by high pressure steam from the main steam supply and the low pressure turbine is driven by low pressure steam extracted from the outlet of the high pressure turbine, and wherein in an auxiliary operation mode, in which the main steam supply is degraded, the low pressure turbine is driven by low pressure steam and the high pressure turbine is cooled by the auxiliary steam injected into the main supply pipe.

### Brief Description of the Drawings

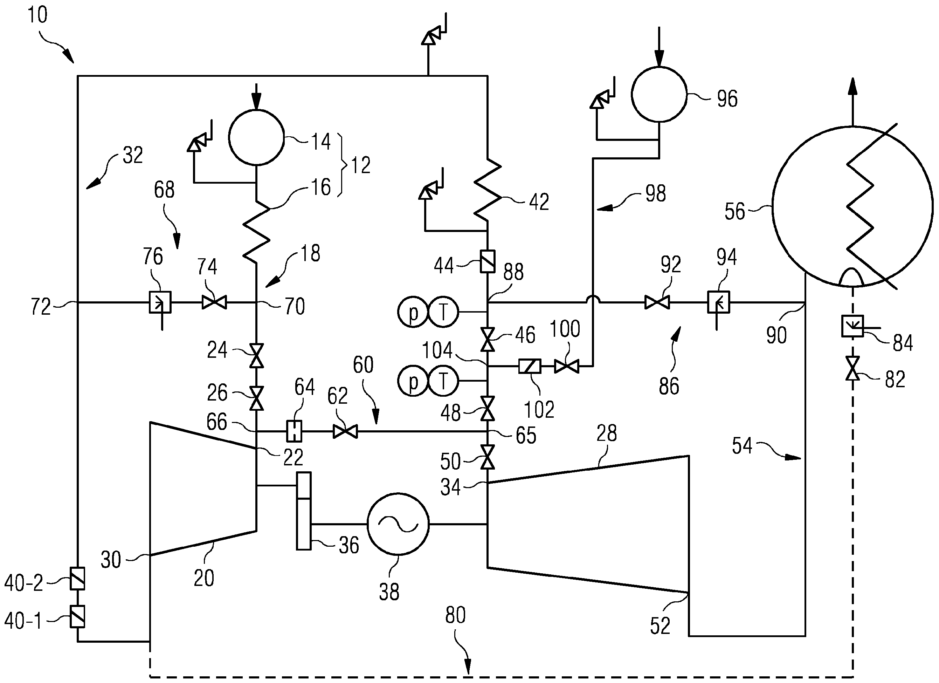

The invention will now be described in more detail by way of an example embodiment with reference to the accompanying drawing, in which
- Fig. 1: is a schematic diagram of a steam turbine facility.

### Description of the Preferred Embodiment

Fig. 1 shows a steam turbine facility 10 for use in a solar power plant.

The facility 10 comprises a main steam supply 12 comprising a steam generator 14 and a superheater 16, for supplying high pressure steam to a main supply pipe 18.

The steam generator 14 is fed with water (cf. arrow at the steam generator 14) from a water-steam-circuit of the solar power plant (not shown).

In a normal operation of the power plant, the main steam supply 12 is operated by means of solar energy, i.e. a received solar power is used to generate and heat the steam fed to the main supply pipe 18, with a pressure of e.g. more than 100 bar and a temperature of e.g. more than 300°C.

The facility 10 further comprises a high pressure turbine 20 drivable by steam fed from the main supply pipe 18 to an inlet 22 of the high pressure turbine 20.

For stopping and controlling, respectively, the main steam flow, the main supply pipe 18 is equipped with a controllable stop valve 24 and a controllable regulation valve 26 (control valve).

Further, the facility 10 comprises a low pressure turbine 28, rotationally coupled to the high pressure turbine 20, and drivable by low pressure steam extracted from an outlet 30 of the high pressure turbine 20 and fed via an intermediate pipe 32 to an inlet 34 of the low pressure turbine 28. The low pressure steam can have a pressure of e.g. less than 50 bar and a temperature of e.g. more than 300°C.

The rotational coupling between the high pressure turbine 20 and the low pressure turbine 28 is accomplished by a reduction transmission 36. In the rotational coupling path, an electrical generator 38 provides for electrical power generation.

In the run of the intermediate pipe 32, from the outlet 30 of the high pressure turbine 20 to the inlet 34 of the low pressure turbine 28, there are arranged the following components: two check valves 40-1, 40-2, a reheater 42 (for reheating the steam flowing over this passage), a check valve 44, a stop valve 46, a stop valve 48, and a control valve 50. The check valves 40-1 and 40-2 are used to allow a lower pressure in the high pressure turbine 20 than in the intermediate pipe 32. Such lower pressure is realized in the "auxiliary operation mode" by means of a suction passage 80 described below.

At an outlet 52 of the low pressure turbine 28, expanded steam is fed in an exhaust pipe 54, which leads to a condenser 56 of the water-steam-circuit.

A connection pipe 60, incorporating a control valve 62 and a throat 64, runs from a branch 65 of the intermediate pipe 32 to a branch 66 of the main supply pipe 18. The branch 65 is provided between the stop valve 48 and the control valve 50, and the branch 66 is provided in close proximity of the inlet 22 of the high pressure turbine 20.

Advantageously, the connection pipe 60 forms "auxiliary operation means" for maintaining turbine operation in a phase of degraded main steam supply. In an "auxiliary operation mode", auxiliary steam is branched off (at the branch 65) from low pressure steam driving the low pressure turbine 28. This branched off auxiliary steam (low pressure steam) is fed in a controlled manner to the branch 66 of the main supply pipe 18 and thus injected at the turbine inlet 22 into the high pressure turbine 20.

This injection provides a cooling effect for the high pressure turbine 20, avoiding an excessive heating and thus the risk of an overheating in this situation, in which the high pressure turbine 20 is operated "without (driving) steam".

The connection pipe 60 forms auxiliary operation means for maintaining turbine operation in a phase of degraded main steam supply, wherein the turbine operation can be maintained for a longer time due to the cooling effect of the steam injected into the high pressure turbine.

The situation of a "degraded steam production" by the main steam supply 12 occurs for example when the actual solar radiation power is decreased by cloudiness at the site of the solar power plant.

In such situation for realizing the "auxiliary operation mode", a controllable high pressure bypass 68 for controllable bypassing the high pressure turbine 20 can be activated. In the shown example, the bypass 68 runs from a branch 70 at the main supply pipe 18 (upstream of the arrangement of steam valves 24, 26) to a branch 72 at the intermediate pipe 32 (upstream of the reheater 42), incorporating a bypass control valve 74 and a water injection device 76.

By means of this bypass 68, "lower quality steam" generated by the main steam supply 12 is passed over the bypass 68 to the inlet 34 of the low pressure turbine 28, so that the low pressure turbine 28 is driven by this low pressure steam. To avoid overheating of the rotationally coupled high pressure turbine 20, the control valve 62 in the connection pipe 60 is opened, so that a portion of the steam driving the low pressure turbine 28 is fed as "cooling steam" in controlled manner to the high pressure turbine 20. The amount of cooling steam can be regulated by means of the control valve 62. The control valve 50 can be used for independently controlling the amount of steam used for driving the low pressure turbine 28.

Besides, in the shown example, there is also a controllable low pressure bypass 86 running from a branch 88 at the intermediate pipe 32 to a branch 90 at the exhaust pipe 54, and incorporating a control valve 92 and a water injection device 94.

The low pressure bypass 86 can be used to lead a part of the steam flow from the intermediate pipe 32 to the condenser 56 in case not all amount of steam is used to drive the low pressure turbine 28.

In summary, in the normal operation mode, the high pressure turbine 20 is driven by high pressure steam from the main steam supply 12 and the low pressure turbine 28 is driven by low pressure steam extracted from the outlet 30 of the high pressure turbine 20. In the auxiliary operation mode, in which the main steam supply is degraded, the low pressure turbine 28 is driven by low pressure steam and the high pressure turbine 20 is cooled by the auxiliary steam injected into the main supply pipe 18 (directly upstream of the inlet 22 of the high pressure turbine 20).

In the auxiliary operation mode, there is preferably provided an activation of a suction passage 80, which is shown in dashed line in Fig. 1, and which connects the outlet 30 of the high pressure turbine 20 in controlled manner (control valve 82) with a water injection device 84 upstream of the condenser 56. The pressure at the condenser inlet is relatively low. Therefore, when the control valve 82 is opened, an active extraction of steam from the outlet 30 of the high pressure turbine 20 takes place, so that the pressure in the downstream region of the high pressure turbine 20 is advantageously reduced. Such reduced pressure lowers the heating effect at the exhaust blades of the high pressure turbine 20.

Due to the "auxiliary operation means" realized by the connection pipe 60, i.e. a controllable path for branching off auxiliary steam from the low pressure steam driving the low pressure turbine, and for injecting this "cooling steam" into the high pressure turbine, the time of operation of the high pressure turbine without driving (high pressure) steam can be remarkably extended.

In the shown example, the steam turbine facility 10 comprises an "alternative steam supply 96 (steam generator) for supplying low pressure steam to an auxiliary supply pipe 98, running via a control valve 100 and a check valve 102 to a branch 104 at the intermediate pipe 32 (between the two stop valves 46 and 48).

The alternative steam supply 96 may be operated e.g. by electrical energy (e.g. achieved from an electrical system connected to the solar power plant).

Such an alternative possibility to generate low pressure steam for the auxiliary operation mode has the advantage that a total shutdown and cooling down of the turbine 20, 28 can also be avoided in the case where the main steam supply 12 fails completely.

## Claims

1. A steam turbine facility, comprising
- a main steam supply (12) supplied with a volatile energy source for supplying high pressure steam to a main supply pipe (18) in a normal operation mode,
- a high pressure turbine(20) drivable in the normal operation mode by steam fed from the main supply pipe (18) to an inlet (22) of the high pressure turbine (20),
- a low pressure turbine (28), rotationally coupled to the high pressure turbine (20), and in the normal operation mode drivable by low pressure steam extracted from an outlet (30) of the high pressure turbine (20) and fed via an intermediate pipe (32) to an inlet (34) of the low pressure turbine (28),
**characterized in that** for maintaining turbine operation in a phase of degraded main steam supply in an auxiliary operation mode the steam turbine facility (10) further comprises
- a controllable high pressure bypass (68) for controllable bypassing of the high pressure turbine (20) in the auxiliary operation mode, so that turbine operation is maintained with driving the low pressure turbine (28), and
- auxiliary operation means (60, 62, 65, 66) designed to branch off auxiliary steam from the low pressure steam driving the low pressure turbine (28), and to inject the auxiliary steam at the inlet (22) of the high pressure turbine (20).

2. The steam turbine facility according to claim 1, wherein the auxiliary operation means (60, 62, 65, 66) comprise a connection pipe (60) connecting a branch (65) of the intermediate pipe (32) with a branch (66) of the main supply pipe (18), and incorporating a controllable steam valve (62).

3. The steam turbine facility according to claim 2, further comprising a control valve (50) between the branch (65) of the intermediate pipe (32) and the inlet (34) of the low pressure turbine (28).

4. The steam turbine facility according to any of the preceding claims, further comprising an alternative steam supply (96) for supplying low pressure steam to the intermediate pipe (32) in the case of degraded main steam supply.

5. A solar power plant, comprising a steam turbine facility (10) according to any of the preceding claims, wherein the main steam supply (12) is provided by means of solar energy.

6. A method for operating a steam turbine facility (10) according to any of claims 1 to 4,
wherein in a normal operation mode, the high pressure turbine (20) is driven by high pressure steam from the main steam supply (12) supplied with a volatile energy source, and the low pressure turbine (28) is driven in the normal operation mode by low pressure steam extracted from the outlet (30) of the high pressure turbine (20), and wherein in an auxiliary operation mode, in which the main steam supply is degraded, for maintaining turbine operation
- the controllable high pressure bypass (68) for controllable bypassing of the high pressure turbine (20) is activated, so that the low pressure turbine (28) is driven by low pressure steam, and
- the high pressure turbine (20) is cooled by the auxiliary steam branched off from the low pressure steam and injected into the main supply pipe (18).

## Patentansprüche

1. Dampfturbineneinrichtung, die Folgendes umfasst:
- eine durch eine unbeständige Energiequelle versorgte Hauptdampfzufuhr (12) zum Zuführen von Hochdruckdampf zu einer Hauptzuleitung (18) in einem normalen Betriebsmodus,
- eine Hochdruckturbine (20), die im normalen Betriebsmodus mit aus der Hauptzuleitung (18) in einen Eintritt (22) der Hochdruckturbine (20) eingespeistem Dampf antreibbar ist,
- eine Niederdruckturbine (28), die mit der Hochdruckturbine (20) drehverbunden und im normalen Betriebsmodus mit aus einem Austritt (30) der Hochdruckturbine (20) entnommenem und über eine Zwischenleitung (32) in einen Eintritt (34) der Niederdruckturbine (28) eingespeistem Niederdruckdampf antreibbar ist,
**dadurch gekennzeichnet, dass** die Dampfturbineneinrichtung (10) zum Beibehalten des Turbinenbetriebs in einer Phase verringerter Hauptdampfzufuhr in einem Behelfsbetriebsmodus ferner Folgendes umfasst:
- einen regelbaren Hochdruckbypass (68) für das regelbare Umgehen der Hochdruckturbine (20) im Behelfsbetriebsmodus, so dass der Turbinenbetrieb bei Antrieb der Niederdruckturbine (28) beibehalten wird, und
- Behelfsbetriebsmittel (60, 62, 65, 66), die so ausgelegt sind, dass sie aus dem die Niederdruckturbine (28) antreibenden Niederdruckdampf Behelfsdampf abzweigen und diesen am Eintritt (22) der Hochdruckturbine (20) injizieren.

2. Dampfturbineneinrichtung nach Anspruch 1, wobei die Behelfsbetriebsmittel (60, 62, 65, 66) eine Verbindungsleitung (60) umfassen, die eine Abzweigung (65) der Zwischenleitung (32) mit einer Abzweigung (66) der Hauptzuleitung (18) verbindet und ein regelbares Dampfventil (62) enthält.

3. Dampfturbineneinrichtung nach Anspruch 2, die ferner zwischen der Abzweigung (65) der Zwischenleitung (32) und dem Eintritt (34) der Niederdruckturbine (28) ein Regelventil (50) umfasst.

4. Dampfturbineneinrichtung nach einem der vorhergehenden Ansprüche, die ferner eine alternative Dampfzufuhr (96) zum Zuführen von Niederdruckdampf zur Zwischenleitung (32) bei verringerter Hauptdampfzufuhr umfasst.

5. Solarkraftwerk mit einer Dampfturbineneinrichtung (10) nach einem der vorhergehenden Ansprüche, wobei die Hauptdampfzufuhr (12) mit Hilfe von Solarenergie erfolgt.

6. Verfahren zum Betreiben einer Dampfturbineneinrichtung (10) nach einem der Ansprüche 1 bis 4,
wobei die Hochdruckturbine (20) in einem normalen Betriebsmodus mit Hochdruckdampf aus der mit einer unbeständigen Energiequelle ausgestatteten Hauptdampfzufuhr (12) und die Niederdruckturbine (28) im normalen Betriebsmodus mit aus dem Austritt (30) der Hochdruckturbine (20) entnommenem Niederdruckdampf angetrieben wird,
und wobei in einem Behelfsbetriebsmodus, in dem die Hauptdampfzufuhr verringert ist, zum Beibehalten des Turbinenbetriebs
- der regelbare Hochdruckbypass (68) zum regelbaren Umgehen der Hochdruckturbine (20) aktiviert wird, so dass die Niederdruckturbine (28) mit Niederdruckdampf angetrieben wird, und
- die Hochdruckturbine (20) mit dem aus dem Niederdruckdampf abgezweigten und in die Hauptzuleitung (18) injizierten Behelfsdampf gekühlt wird.

## Revendications

1. Installation de turbine à vapeur, comprenant
- une alimentation en vapeur principale (12) pourvue d'une source d'énergie volatile pour alimenter en vapeur haute pression un tuyau d'alimentation principal (18) dans un mode de fonctionnement normal,
- une turbine haute pression (20) pouvant être entraînée dans le mode de fonctionnement normal par de la vapeur introduite à partir du tuyau d'alimentation principal (18) dans une entrée (22) de la turbine haute pression (20),
- une turbine basse pression (28), accouplée en rotation à la turbine haute pression (20), et pouvant être entraînée dans le mode de fonctionnement normal par de la vapeur basse pression extraite d'une sortie (30) de la turbine haute pression (20) et introduite par le biais d'un tuyau intermédiaire (32) dans une entrée (34) de la turbine basse pression (28),
**caractérisée en ce que**, pour maintenir le fonctionnement de la turbine dans une phase d'alimentation en vapeur principale dégradée dans un mode de fonctionnement auxiliaire, l'installation de turbine à vapeur (10) comprend en outre
- une dérivation haute pression pouvant être régulée (68) pour la dérivation pouvant être régulée de la turbine haute pression (20) dans le mode de fonctionnement auxiliaire, de sorte que le fonctionnement de la turbine soit maintenu avec entraînement de la turbine basse pression (28), et
- des moyens de fonctionnement auxiliaires (60, 62, 65, 66) conçus pour séparer par bifurcation de la vapeur auxiliaire de la vapeur basse pression entraînant la turbine basse pression (28), et pour injecter la vapeur auxiliaire au niveau de l'entrée (22) de la turbine haute pression (20).

2. Installation de turbine à vapeur selon la revendication 1, dans laquelle les moyens de fonctionnement auxiliaires (60, 62, 65, 66) comprennent un tuyau de raccordement (60) raccordant une bifurcation (65) du tuyau intermédiaire (32) à une bifurcation (66) du tuyau d'alimentation principal (18), et incorporant une soupape de vapeur pouvant être régulée (62).

3. Installation de turbine à vapeur selon la revendication 2, comprenant en outre une soupape de régulation (50) entre la bifurcation (65) du tuyau intermédiaire (32) et l'entrée (34) de la turbine basse pression (28).

4. Installation de turbine à vapeur selon l'une quelconque des revendications précédentes, comprenant en outre une autre alimentation en vapeur (96) pour alimenter en vapeur basse pression le tuyau intermédiaire (32) dans le cas d'une alimentation en vapeur principale dégradée.

5. Centrale solaire, comprenant une installation de turbine à vapeur (10) selon l'une quelconque des revendications précédentes, dans laquelle l'alimentation en vapeur principale (12) est fournie au moyen d'énergie solaire.

6. Procédé pour faire fonctionner une installation de turbine à vapeur (10) selon l'une quelconque des revendications 1 à 4, dans lequel, dans un mode de fonctionnement normal, la turbine haute pression (20) est entraînée par de la vapeur haute pression issue de l'alimentation en vapeur principale (12) pourvue d'une source d'énergie volatile, et la turbine basse pression (28) est entraînée dans le mode de fonctionnement normal par de la vapeur basse pression extraite de la sortie (30) de la turbine haute pression (20), et dans lequel, dans un mode de fonctionnement auxiliaire, dans lequel l'alimentation en vapeur principale est dégradée, pour maintenir le fonctionnement de la turbine
- la dérivation haute pression pouvant être régulée (68) pour la dérivation pouvant être régulée de la turbine haute pression (20) est activée, de sorte que la turbine basse pression (28) soit entraînée par de la vapeur basse pression, et
- la turbine haute pression (20) est refroidie par la vapeur auxiliaire séparée par bifurcation de la vapeur basse pression et injectée dans le tuyau d'alimentation principal (18).
